# EUROPÄISCHE PATENTANMELDUNG

(11) **EP 4 142 263 A1**
(43) Veröffentlichungstag der Anmeldung: **01.03.2023**
(21) Anmeldenummer: 21193495.5
(22) Anmeldetag: 27.08.2021
(51) Int. Cl.: H04L 67/125, H04W 4/44, H04L 67/56

(54) **VERFAHREN, FERNZUGRIFFSSERVER, KOMMUNIKATIONSVORRICHTUNG UND SYSTEM FÜR EINEN FERNZUGRIFF AUF EIN FAHRZEUG**

(71) Anmelder: Hella Gutmann Solutions GmbH, 79241 Ihringen (DE)
(72) Erfinder: KOLBERG, Ralph, 79111 Freiberg i. Br. (DE); GRUN, Felix, 79241 Ihringen (DE); ABRAHAM, Heiko, 79241 Ihringen (DE); FRÖDRICH Matthias, 79312 Emmendingen (DE); GEISSERT, Sven, 79241 Ihringen (DE); DAHMEN, Oliver, 79346 Endingen (DE)
(74) Vertreter: Pfenning, Meinig & Partner mbB

(57) **Zusammenfassung**

Die vorliegende Erfindung bezieht sich auf verschiedene Verfahren, Vorrichtungen (20, 30, 40) und Systeme (100) für einen Fernzugriff auf ein Fahrzeug (10).

## Beschreibung

Die vorliegende Erfindung bezieht sich auf Verfahren, Vorrichtungen und Systeme für einen Fernzugriff auf ein Fahrzeug.

Moderne Fahrzeuge sind komplexe elektrische und mechanische Systeme, die viele miteinander kommunizierende Komponenten verwenden, um einen sicheren und effizienten Fahrzeugbetrieb zu unterstützen. Derartige Komponenten können anfällig für Störungen, Ausfälle und Fehler sein, welche den Betrieb eines Fahrzeugs beeinträchtigen können. Wenn derartige Störungen, Ausfälle oder Fehler auftreten, kann die beeinträchtigte Komponente einen entsprechenden Fehlercode auslösen, zum Beispiel einen Diagnostic Trouble Code (DTC). Der Fehlercode wird in der Regel durch ein Fahrzeugsteuergerät erzeugt und in einem fahrzeugseitigen Speicher gespeichert. Hiernach kann je nach Schwere des Fehlers etwa ein Warnsignal oder eine Fehlermeldung ausgegeben werden, durch das der Fahrer veranlasst wird, eine Werkstatt aufzusuchen.

Mittels einer Auswertung des Fehlercodes kann eine Aussage darüber getroffen werden, welche Fahrzeugkomponenten fehlerbehaftet oder defekt sind, und zum Beispiel eine Reparatur benötigen. Zu dieser sogenannten Fahrzeugdiagnose ist üblicherweise eine Fahrzeugdiagnoseschnittstelle im Fahrzeug vorgesehen, welche oftmals im Fußraum beim Fahrer angeordnet ist.

Typischerweise wird ein externes Fahrzeugdiagnosegerät an die Fahrzeugdiagnoseschnittstelle angeschlossen, um die gespeicherten Fehlercodes auszulesen. Hiernach werden die Fehlercodes durch das Fahrzeugdiagnosegerät analysiert, um zu diagnostizieren, welche Komponenten repariert oder ersetzt werden müssen, um das Problem zu beheben. Im Werkstattalltag haben sich solche Fahrzeugdiagnosegeräte bewährt.

Es gibt auch Situationen, in welchen ein Fahrzeugdiagnosegerät nicht vorhanden ist oder in welchen geschultes Personal zur Auswertung oder Bedienung des Fahrzeugdiagnosegeräts fehlt. Wenn beispielsweise ein Fahrzeug im Pannenfall liegen bleibt, ist eine Fahrzeugdiagnose oder gar eine umfassende fahrzeugspezifische Fahrzeugdiagnose vor Ort oftmals nicht möglich. Auch bei Testfahrten in unzugänglichen Gebieten ist eine Fahrzeugdiagnose vor Ort nicht immer möglich. Während der Testfahrt tritt beispielsweise ein ungewöhnliches Verhalten auf, welches nur in einer ganz besonderen Fahrsituation vorkommt. Eine genaue Untersuchung durch einen Experten oder Entwickler wäre wünschenswert, der ist aber nur selten in der Nähe.

Selbst bei bekannten Fehlercodes ist es oft umständlich, auf die eigentliche Ursache der Fehlermeldung zu schließen. Wenn beispielsweise als Fehler eine erhöhte Kühlmitteltemperatur gemeldet wird, können die Fehlerursachen vielfältig sein, etwa ein Mangel an Kühlflüssigkeit aufgrund einer Undichtigkeit im Kühlsystem, ein mangelnder Flüssigkeitsdurchsatz aufgrund von Dampfblasen oder einer defekten Kühlmittelpumpe, oder eine Überhitzung aufgrund einer vorherigen Fahrzeugbelastung und klimatischen Bedingungen. Aus diesem Grund wird das Fahrzeug oftmals erstmal für eine Fahrzeugdiagnose zur Werkstatt gebracht, obwohl sich die Störursache manchmal sogar vor Ort beheben ließe. Es kann auch vorkommen, dass bei Ankunft in der Werkstatt festgestellt wird, dass dort die passenden Ersatzteile, das benötigte Werkzeug oder entsprechend geschulte Fachkräfte fehlen, um die Fehlerursache zu beheben. In diesem Fall wäre es besser gewesen, eine andere Werkstatt aufzusuchen, welche im Stande gewesen wäre, den Fehler zu beseitigen.

Bei manchen Fahrzeugen können bestimmte Fehlercodes, Betriebsparameter und Fahrzeuginformationen ausgelesen werden, welche dann zur Auswertung an einen entfernten Telematikserver gesandt werden. Ein umfassender Fernzugriff auf fahrzeugseitige Steuergeräte oder eine umfassende Fahrzeugdiagnose ist aber meistens nicht möglich, da einerseits die Zugriffsrechte verweigert werden und andererseits der Telematikserver meistens nicht in der Lage ist, eine umfassende und fahrzeugspezifische Fahrzeugdiagnose durchzuführen.

Aufgrund der steigenden Komplexität der Fahrzeugtechnik besteht daher ein großer Bedarf an einer schnellen und zuverlässigen Fehlerursachenbestimmung, insbesondere vor Ort im Pannenfall und außerhalb der Werkstatt. Insbesondere wäre es wünschenswert, eine praxistaugliche Lösung für die Fehlerursachenbestimmung zu finden.

Die genannten Probleme werden nach der beschriebenen Erfindung zumindest teilweise oder zu einem wesentlichen Teil durch die Verfahren und Gegenstände der unabhängigen Ansprüche gelöst. Vorteilhafte Merkmale und Weiterbildungen ergeben sich durch die Merkmale der abhängigen Ansprüche sowie aus der nachfolgenden Beschreibung.

Gemäß einem ersten Aspekt wird ein Verfahren für einen Fernzugriff auf ein Fahrzeug mittels eines Fernzugriffsservers vorgeschlagen. Hierbei ist der Fernzugriffsserver ausgestaltet, auf mindestens ein fahrzeugseitiges Steuergerät zuzugreifen, um den Ferngriff durchzuführen.

Weiter ist eine im, am oder beim Fahrzeug angeordnete Kommunikationsvorrichtung ausgestaltet, über eine Luftschnittstelle mit einem Vermittlungsserver zu kommunizieren und über eine weitere Kommunikationsschnittstelle mit mindestens einem fahrzeugseitigen Steuergerät zu kommunizieren.

Die Kommunikationsvorrichtung weist
- einen Datenübertragungsmodus, welcher eine Datenübertragung von dem mindestens einen fahrzeugseitigen Steuergerät zu dem Vermittlungsserver ermöglicht, und
- einen Fernzugriffsmodus, welcher den Fernzugriff durch den Fernzugriffsserver auf das mindestens eine fahrzeugseitige Steuergerät über den Vermittlungsserver ermöglicht, auf.

Das Verfahren umfasst zumindest die Schritte:
- Senden einer Aktivierungsnachricht von dem Fernzugriffsserver über den Vermittlungsserver an die Kommunikationsvorrichtung, um den Fernzugriffsmodus zu aktivieren und von dem Datenübertragungsmodus in den Fernzugriffsmodus zu wechseln und
- Durchführen des Fernzugriffs auf das mindestens ein fahrzeugseitige Steuergerät durch den Fernzugriffsserver.

Das vorgeschlagene Verfahren ermöglicht also einen Fernzugriff auf das mindestens eine fahrzeugseitige Steuergerät mittels des Fernzugriffsservers. Das Verfahren wird vorzugsweise lediglich oder zumindest durch den Fernzugriffsserver durchgeführt. Mittels der Aktivierungsnachricht wird der Fernzugriffsmodus freigegeben. Hierdurch kann sichergestellt werden, dass nur eine dazu berechtigte Instanz, nämlich der Fernzugriffsserver, auf das jeweilige Fahrzeugsteuergerät zugreifen kann. Insofern ist der Fernzugriff im Datenübertragungsmodus nicht möglich.

Andererseits ist der Vermittlungsserver zwischen dem Fahrzeug und dem Fernzugriffsserver geschaltet und vermittelt die Kommunikation zwischen dem Fahrzeug und dem Fernzugriffsserver. Hierdurch kann der Fernzugriff auch dann erfolgen, wenn eine direkte Verbindung des Fahrzeuges mit dem Fernzugriffsserver nicht möglich ist. Außerdem kann hierdurch auf bestehende Lösungen zurückgegriffen werden bzw. bereits funktionsfähige Systeme können modular erweitert werden.

Optional umfasst das Verfahren den Schritt:
- periodisches Senden von Keep-Alive-Signalen an die Kommunikationsvorrichtung, um den Fernzugriffsmodus aufrecht zu erhalten.

Es kann vorgesehen sein, dass die Keep-Alive-Signale in Abhängigkeit einer ermittelten Latenzzeit gesendet werden.

Gemäß einem zweiten Aspekt der vorliegenden Erfindung wird ein weiteres Verfahren für einen Fernzugriff auf ein Fahrzeug vorgeschlagen. Eine im, am oder beim Fahrzeug angeordnete Kommunikationsvorrichtung ist ausgestaltet, über eine Luftschnittstelle mit einem Vermittlungsserver zu kommunizieren und über eine weitere Kommunikationsschnittstelle mit mindestens einem fahrzeugseitigen Steuergerät zu kommunizieren.

Die Kommunikationsvorrichtung umfasst:
- einen Datenübertragungsmodus, welcher eine Datenübertragung von dem mindestens einen fahrzeugseitigen Steuergerät zu dem Vermittlungsserver ermöglicht, und
- einen Fernzugriffsmodus, welcher den Zugriff durch einen Fernzugriffsserver auf das mindestens eine fahrzeugseitige Steuergerät über den Vermittlungsserver ermöglicht.

Das Verfahren umfasst die Schritte:
- Empfangen einer Aktivierungsnachricht von dem Fernzugriffsserver über den Vermittlungsserver und
- Wechseln von dem Datenübertragungsmodus in den Fernzugriffsmodus basierend auf der Aktivierungsnachricht.

Das Verfahren wird vorzugsweise lediglich oder zumindest durch die Kommunikationsvorrichtung durchgeführt.

Optional kann das Verfahren den folgenden Schritt umfassen:
- Empfangen einer Zustimmungsnachricht, insbesondere einer Text- oder Sprachnachricht, um dem Fernzugriff zuzustimmen, und
- Wechseln von dem Datenübertragungsmodus in den Fernzugriffsmodus basierend auf der Aktivierungsnachricht und der Zustimmungsnachricht.

Die Zustimmungsnachricht kann zum Beispiel direkt an der Kommunikationsvorrichtung eingegeben werden. In diesem Fall kann die Kommunikationsvorrichtung über eine entsprechende Eingabevorrichtung verfügen. Die Zustimmungsnachricht kann aber auch von einem mobilen Endgerät empfangen werden, welches kommunikativ mit der Kommunikationsvorrichtung verbunden ist, z.B. drahtlos und/oder drahtgebunden. Mittels der Zustimmungsnachricht kann sichergestellt werden, dass nur dann ein Fernzugriff erlaubt wird, wenn dieser durch den Benutzer bestätigt und freigegeben wird. Hierdurch können unerlaubte Zugriffe wie Hackerangriffe vermieden werden.

Das Verfahren kann weiter die folgenden Schritte aufweisen: Empfangen eines Keep-Alive-Signals, welches vorzugsweise in periodischen Abständen empfangen wird, und Aufrechterhalten des Fernzugriffsmodus in Abhängigkeit von dem Keep-Alive-Signal.

Gemäß einem dritten Aspekt wird ein weiteres Verfahren für einen Fernzugriff auf ein Fahrzeug vorgeschlagen.

Das Verfahren umfasst die Schritte:
- Empfangen einer Aktivierungsnachricht von einem Fernzugriffsserver und
- Weiterleiten der Aktivierungsnachricht an eine Kommunikationsvorrichtung über eine Luftschnittstelle zum Wechseln der Kommunikationsvorrichtung eines Datenübertragungsmodus in einen Fernzugriffsmodus, welcher den Zugriff durch den Fernzugriffsserver auf mindestens ein fahrzeugseitiges Steuergerät über den Vermittlungsserver ermöglicht, basierend auf der Aktivierungsnachricht.

Das Verfahren wird vorzugsweise lediglich oder zumindest durch den Vermittlungsserver durchgeführt.

Die genannten Verfahren gemäß dem ersten Aspekt, dem zweiten Aspekt und dem dritten Aspekt ergänzen sich und sind insbesondere zueinander kompatibel. Insofern können die Merkmale und Abläufe der Verfahren gemäß dem ersten Aspekt, dem zweiten Aspekt und dem dritten Aspekt miteinander kombiniert werden. Im Folgenden wird der Einfachheit halber manchmal auf "das Verfahren" oder "mindestens eines der Verfahren" Bezug genommen. Hierbei ist dem Fachmann klar, dass lediglich eins der Verfahren, mindestens eins, mindestens zwei oder alle drei die Verfahren gemeint sein können.

Optional kann in mindestens einem der oben genannten Verfahren der folgende Schritt vorgesehen sein:
- Aufbauen einer ersten Kommunikationsverbindung zwischen der Kommunikationsvorrichtung und dem Vermittlungsserver über die Luftschnittstelle.

Oftmals wird zunächst die erste Kommunikationsverbindung hergestellt. Die erste Kommunikationsverbindung findet standardmäßig im Datenübertragungsmodus statt. Im Datenübertragungsmodus können Daten zwischen der Kommunikationsvorrichtung und dem Vermittlungsserver ausgetauscht werden.

Optional kann in mindestens einem der oben genannten Verfahren der folgende Schritt vorgesehen sein:
- Aufbauen einer zweiten Kommunikationsverbindung zwischen dem Vermittlungsserver und dem Fernzugriffsserver.

Der Aufbau der ersten Kommunikationsverbindung kann den Aufbau der zweiten Kommunikationsverbindung automatisch auslösen. Alternativ kann auch vorgesehen sein, dass die zweite Kommunikationsverbindung durch ein weiteres Ereignis ausgelöst wird, zum Beispiel den Empfang einer Nachricht von einem mobilen Endgerät. Alternativ kann die zweite Kommunikationsverbindung bereits vor Aufbau der ersten Kommunikationsverbindung bestehen. Manchmal kann die zweite Kommunikationsverbindung eine dauerhafte Kommunikationsverbindung sein.

Anschließend kann in mindestens einem der oben genannten Verfahren der folgende Schritt vorgesehen sein:
- Herstellen eines bidirektionalen Kommunikationskanals zwischen der Kommunikationsvorrichtung und dem Fernzugriffsserver über den Vermittlungsserver.

Der bidirektionale Kommunikationskanal kann als sogenannter Tunnel ausgestaltet sein, welcher verschlüsselt sein kann. Vorzugsweise wird der Fernzugriff erst dann erlaubt, wenn der bidirektionale Kommunikationskanal bzw. der Tunnel hergestellt ist. Auf diese Weise lassen sich unsichere Netzwerkprotokolle eingebettet in einem gesicherten und verschlüsselten Netzwerkprotokoll abhör- und manipulationssicher transportieren.

Optional können in mindestens einem der oben genannten Verfahren die folgenden Schritte vorgesehen sein:
- Empfangen einer Anfrage für einen Fernzugriff, wobei die Anfrage mindestens ein Identifikationsmittel zum Identifizieren des Fahrzeuges und/oder zum Identifizieren der Kommunikationsvorrichtung enthält,
- Herstellen des Kommunikationskanals zwischen der Kommunikationsvorrichtung und dem Fernzugriffsserver basierend auf der Anfrage,
- Durchführen des Fernzugriffs durch den Fernzugriffsserver über den Kommunikationskanal.

Mit der genannten Anfrage kann der Fernzugriff also initiiert werden. Die Anfrage kann an verschiedenen Stellen empfangen werden, beispielsweise in der Kommunikationsvorrichtung, im Vermittlungsserver und/oder im Fernzugriffsserver. Die Anfrage für den Fernzugriff kann optional in einem mobilen Endgerät erzeugt werden und/oder von dem mobilen Endgerät weitergeleitet werden. Das mobile Endgerät kann hierzu mit der Kommunikationsvorrichtung, dem Vermittlungsserver und/oder dem Fernzugriffsserver kommunikativ in Verbindung stehen.

Weitere Sicherheitsmaßnahmen können vorgesehen sein, um einen unerwünschten Zugriff auf das fahrzeugseitige Steuergerät zu vermeiden. Beispielsweise können in mindestens einem der oben genannten Verfahren nachfolgende Schritte implementiert werden:
- Beurteilen, ob sich das Fahrzeug bewegt, insbesondere anhand von GPS-Daten, Satellitendaten, Funkortungssignalen oder Bewegungsdaten von Bewegungssensoren,
- wenn festgestellt wird, dass sich das Fahrzeug bewegt: Beenden des Fernzugriffsmodus und/oder Aktivieren des Datenübertragungsmodus und/oder Abbrechen des Kommunikationskanals zwischen der Kommunikationsvorrichtung und dem Fernzugriffsserver,

- wenn festgestellt wird, dass sich das Fahrzeug im Stillstand befindet: Aktivieren des Fernzugriffsmodus und/oder Aufbauen des Kommunikationskanals und/oder Aufrechterhalten des Kommunikationskanals.

Die Beurteilung, ob sich das Fahrzeug bewegt oder nicht, kann durch die Kommunikationsvorrichtung, den Vermittlungsserver und/oder den Fernzugriffsserver durchgeführt werden. Dies kann zum Beispiel davon abhängen, welche Bewegungsdaten herangezogen werden. Wenn die Bewegungsdaten von fahrzeugseitigen Bewegungssensoren herangezogen werden, kann die Beurteilung vorteilhaft durch die Kommunikationsvorrichtung durchgeführt werden. Falls GPS-Daten, Satellitendaten, Funkortungssignale für die Beurteilung herangezogen werden, kann die Beurteilung durch den Vermittlungsserver oder den Fernzugriffsserver durchgeführt werden.

Im oben genannten Datenübertragungsmodus ist eine einfache Kommunikation zwischen der Kommunikationsvorrichtung und dem Vermittlungsserver möglich, insbesondere eine unidirektionale Kommunikation von den Steuergeräten zum Vermittlungsserver über die Kommunikationsvorrichtung. Bei der Datenübertragung im Datenübertragungsmodus können Telematikdaten übertragen werden, wobei die Telematikdaten Fahrzeugkenndaten, Fehlercodes und/oder Fahrzeugsensormesswerte umfassen, insbesondere gemäß einem genormten oder spezifischen Protokoll. Im Datenübertragungsmodus können in den fahrzeugseitigen Steuergeräten gespeicherte Daten, Funktionen, Programme oder Einstellungen oftmals lediglich ausgelesen, aber nicht erzeugt oder geändert werden.

Im manchen Ausführungsformen weist das Fahrzeug eine Vielzahl von Steuergeräten auf, wobei die Datenübertragung von den fahrzeugseitigen Steuergeräten zum Vermittlungsserver im Datenübertragungsmodus auf eine vorbestimmte erste Gruppe von fahrzeugseitigen Steuergeräten beschränkt ist. Nachstehend wird die genannte erste Gruppe von Steuergeräten auch als erste Steuergeräte bezeichnet. Es können somit im Datenübertragungsmodus nicht alle Steuergeräte mit externen Geräten (Kommunikationsvorrichtung, Vermittlungsserver und/oder Fernzugriffsserver) kommunizieren.

Die ersten Steuergeräte können zum Beispiel für Fahrzeugfunktionen zuständig sein, welche nicht-kritisch oder nicht-relevant für die Sicherheit des Fahrzeuges sind, oder sich zum Beispiel ausschließlich auf abgasrelevante Daten/Funktionen beziehen, beispielsweise Funktionen der Motorsteuerung, Klimaanlage, oder der Abgaskontrolle. Die ersten Steuergeräte können ein oder in selteneren Fällen, mehrere Steuergeräte umfassen, zum Beispiel eine erste Anzahl von Steuergeräten. Bei diesem/n Steuergeräte/n wird in manchen Ausführungsformen ausschließlich ein (SAE oder ISO) genormtes Protkollverfahren und genormte Protokoll-Parameter verwendet.

Im Fernzugriffsmodus kann sich der Fernzugriff auf eine zweite Gruppe von fahrzeugseitigen Steuergeräten erstrecken. Die erste Gruppe unterscheidet sich typischerweise von der ersten Gruppe. Die Steuergeräte der zweiten Gruppe können vorbestimmt sein, aber müssen nicht vorbestimmt sein. Die zweiten Steuergeräte können im Pannenfall relevant sein oder fahrzeugsicherheitsrelevante Funktionen wie Bremsen, Lenken, Motorsteuerung usw. aufweisen. Zusätzlich kann die erste Gruppe von Steuergeräten zumindest teilweise oder gänzlich in der zweiten Gruppe enthalten sein. Die zweiten Steuergeräte können eine zweite Anzahl von Steuergeräten umfassen. Die zweite Anzahl unterscheidet sich in der Regel von der ersten Anzahl und ist üblicherweise größer, vorzugsweise erheblich größer als die erste Anzahl, z.B. mindestens zweimal größer. Es kann eine teilweise Überschneidung der ersten und der zweiten Steuergeräte im Fernzugriffsmodus geben. Die zweite Gruppe ist typischerweise nicht beschränkt; optional kann sich der Fernzugriff im Fernzugriffsmodus auf alle fahrzeugseitigen Steuergeräte erstrecken. Der Umfang der Diagnoseparameter ist bei der zweiten Gruppe meist umfangreicher und detaillierter.

Der Fernzugriffsserver kann im Fernzugriffsmodus berechtigt sein, Daten, Einstellungen und/oder Programme im fahrzeugseitigen Steuergerät zu lesen, schreiben und ändern. Andererseits können im Datenübertragungsmodus Daten des Steuergerätes nur gelesen werden. Optional umfasst der Fernzugriff eine Fernwirkung, Fernsteuerung, Ferndiagnose, Fernunterstützung, Fernkonfigurierung, Fernwartung, Softwareaktualisierung und/oder Remote-Flashing des fahrzeugseitigen Steuergeräts durch den Fernzugriffsserver. Vorzugsweise findet der Fernzugriff basierend auf einem Fahrzeugidentifikationsmerkmal und/oder einem Steuergerätidentifikationsmerkmal statt. So können der Fernzugriff und/oder die Aktivierungsnachricht basierend auf einem Fahrzeugidentifikationsmerkmal und/oder einem Steuergerätidentifikationsmerkmal konfiguriert werden.

Die Aktivierungsnachricht kann insbesondere in Bezug auf das Fahrzeugidentifikationsmerkmal und/oder das Steuergerätidentifikationsmerkmal erzeugt werden. Dies kann vorteilhaft sein, da unterschiedliche Fahrzeughersteller meistens verschiedene Kommunikationsprotolle für die Kommunikation mit den Steuergeräten im Fahrzeug verwenden.

Das Verfahren kann mindestens einen der folgenden Schritte enthalten:
- Empfangen mindestens eines Fahrzeugidentifikationsmerkmals, wobei das Fahrzeugidentifikationsmerkmal eine Fahrzeugidentifizierungsnummer und/oder einen Motorcode und/oder eine Steuergerätidentifizierungsnummer umfasst,
- Vergleichen des Fahrzeugidentifikationsmerkmals mit bekannten Fahrzeugidentifikationsmerkmalen aus einer Datenbank und
- Erkennen des Fahrzeuges durch den Vergleich, vorzugsweise fahrzeugherstellerübergreifend und vom Fahrzeughersteller unabhängig.

Das Fahrzeugidentifikationsmerkmal gibt beispielsweise den Fahrzeughersteller und/oder einen Fahrzeugtyp des Fahrzeugs und darüber hinaus gegebenenfalls Ausstattungsmerkmale des Fahrzeugs wie die Motorvariante oder Einspritzsystem an. Das Fahrzeugidentifikationsmerkmal kann beispielsweise eine fahrzeugindividuelle Nummer umfassen, etwa eine Fahrzeugidentifizierungsnummer (nachstehend: FIN, englisch: Vehicle Identification Number, VIN), mit welcher ein Fahrzeug eindeutig identifizierbar sein kann. Mit Hilfe des Fahrzeugidentifikationsmerkmals können Informationen zu dem Fahrzeug oder zu vergleichbaren Fahrzeugen aus der Datenbank auf einfache Art und Weise ermittelt werden. Es hat sich herausgestellt, dass die FIN nicht immer ausreicht, um die Identität des Fahrzeuges eindeutig festzustellen. In diesem Fall kann mindestens ein weiteres Fahrzeugidentifikationsmerkmal verwendet werden, beispielsweise ein Motorcode und/oder eine Steuergerätidentifizierungsnummer und/oder eine Kurzbezeichnung des Fahrzeuges. Die Kurzbezeichnung des Fahrzeuges kann in einem Steuergerät des Fahrzeuges hinterlegt sein und kann eine Auskunft über Hersteller, Typ und/oder Ausstattung des Fahrzeuges geben.

Durch Kombination von mindestens zwei Fahrzeugidentifikationsmerkmalen kann auf die Identität des Fahrzeuges geschlossen werden und das Fahrzeug (Hersteller, Typ und/oder Ausstattung) erkannt werden. Alternativ kann die Identität des Fahrzeuges über eine Erkennung eines Musters im Fahrzeugidentifikationsmerkmal und Abgleich mit gleichen oder ähnlichen Mustern der Datenbank festgestellt werden.

Erforderliche Kommunikationsparameter können so fallspezifisch selektiert und zusammengestellt werden.

Weiterhin wird gemäß einem vierten Aspekt ein Fernzugriffsserver bereitgestellt, welcher zum Durchführen des Verfahrens gemäß dem ersten Aspekt ausgestaltet ist.

Außerdem wird gemäß einem fünften Aspekt eine Kommunikationsvorrichtung eine Kommunikationsvorrichtung bereitgestellt, welche zum Durchführen des oben genannten Verfahrens gemäß dem zweiten Aspekt ausgestaltet ist.

Die Kommunikationsvorrichtung weist Folgendes auf:
- einen Datenübertragungsmodus, welcher eine Datenübertragung von dem mindestens einen fahrzeugseitigen Steuergerät zu dem Vermittlungsserver ermöglicht, und
- einen Fernzugriffsmodus, welcher den Zugriff durch einen Fernzugriffsserver auf das mindestens eine fahrzeugseitige Steuergerät über den Vermittlungsserver ermöglicht.

Die Kommunikationsvorrichtung kann einen Schalter, insbesondere einen virtuellen Schalter, aufweisen, welcher ausgestaltet ist, zwischen dem Datenübertragungsmodus und dem Fernzugriffsmodus zu wechseln.

Die Kommunikationsvorrichtung kann ausgestaltet sein, über eine im Fahrzeug vorgesehene Diagnoseschnittstelle mit dem mindestens einen Fahrzeugdiagnosegerät zu kommunizieren. Die Kommunikationsschnittstelle der Kommunikationsvorrichtung kann mit einer fahrzeugseitigen Diagnoseschnittstelle verbindbar sein, insbesondere mechanisch und/oder elektrisch verbindbar. Hierzu kann die Kommunikationsvorrichtung einen Stecker aufweisen, welcher mechanisch und elektrisch mit der Diagnoseschnittstelle verbindbar ist. Manchmal kann die Kommunikationsvorrichtung als Dongle ausgestaltet sein.

Die Kommunikationsvorrichtung kann somit einerseits drahtgebunden mit dem fahrzeugseitigen Fahrzeugsteuergerät kommunizieren und andererseits drahtlos über die Luftschnittstelle mit dem Vermittlungsserver kommunizieren. Die Kommunikationsvorrichtung schafft somit die Voraussetzung für eine gute Funkqualität bzw. drahtlose Kommunikationsverbindung mit dem außerhalb des Fahrzeuges befindlichen Vermittlungsserver.

Hierbei sei angemerkt, dass die Kommunikationsvorrichtung und das mindestens eine Fahrzeugdiagnosegerät voneinander getrennte, jedoch verbindbare, Objekte sein können. Alternativ kann die Kommunikationsvorrichtung jedoch auch integraler Bestandteil des Fahrzeuges sein und als solcher in dieses integriert sein.

Gemäß einem sechsten Aspekt der Erfindung wird ein Vermittlungsserver vorgeschlagen, welcher zum Durchführen des Verfahrens gemäß dem dritten Aspekt ausgestaltet ist. Der Vermittlungsserver ist insbesondere ausgestaltet, über eine Luftschnittstelle mit einer im, am oder beim Fahrzeug angeordnete Kommunikationsvorrichtung zu kommunizieren. Der Vermittlungsserver ist außerdem ausgestaltet, mit einem Fernzugriffsserver zu kommunizieren. Der Vermittlungsserver kann bereits im Datenübertragungsmodus mit der Kommunikationsvorrichtung kommunizieren.

Die Kommunikationsvorrichtung, der Fernzugriffsserver und der Vermittlungsserver ergänzen sich und sind insbesondere kompatibel zueinander. Daher können die Merkmale der Vorrichtungen gemäß dem vierten und fünften und/oder sechsten Aspekt miteinander verbunden werden, insbesondere zur Bildung eines Systems.

Gemäß einem siebten Aspekt wird ein System bereitgestellt. Das System umfasst zumindest den oben genannten Fernzugriffserver und die oben genannte Kommunikationsvorrichtung. Optional kann das System zusätzlich den oben genannten Vermittlungsserver aufweisen. Das System kann unter Umständen ohne den Vermittlungsserver hergestellt und vermarktet werden, wodurch sich der Schutzbereich des beanspruchten Systems in diesen Fällen auch auf Solche Systeme erstreckt, welche den Vermittlungsserver nicht enthalten.

Es sei an dieser Stelle betont, dass Merkmale, die nur in Bezug auf die Verfahren genannt wurden, auch für die genannten Vorrichtungen bzw. das genannte System beansprucht werden können und umgekehrt. Es versteht sich, dass die oben beschriebenen Ausführungsformen miteinander kombiniert werden können, sofern sich die Kombinationen nicht gegenseitig ausschließen.

Im Folgenden werden Ausführungsformen der Erfindung anhand beigefügter Zeichnungen näher erläutert. Hierbei sind die Figuren schematisiert und teilweise vereinfacht. Gezeigt werden:
- Fig. 1: eine schematische Darstellung einer mit einem Fahrzeug verbundenen Kommunikationsvorrichtung;
- Fig. 2: eine schematische Darstellung einer mit einem Fahrzeug verbundenen Kommunikationsvorrichtung, welche über eine Luftschnittstelle mit einem Vermittlungsserver verbunden ist;
- Fig. 3: eine schematische Darstellung eines Systems zum Durchführen eines Fernzugriffs auf fahrzeugseitige Steuergeräte;
- Fig. 4: eine schematische Darstellung eines Systems zum Durchführen eines Fernzugriffs auf fahrzeugseitige Steuergeräte;
- Fig. 5: eine schematische Darstellung eines Systems zum Durchführen eines Fernzugriffs auf fahrzeugseitige Steuergeräte;
- Fig. 6: eine schematische Darstellung eines Systems zum Durchführen eines Fernzugriffs auf fahrzeugseitige Steuergeräte;

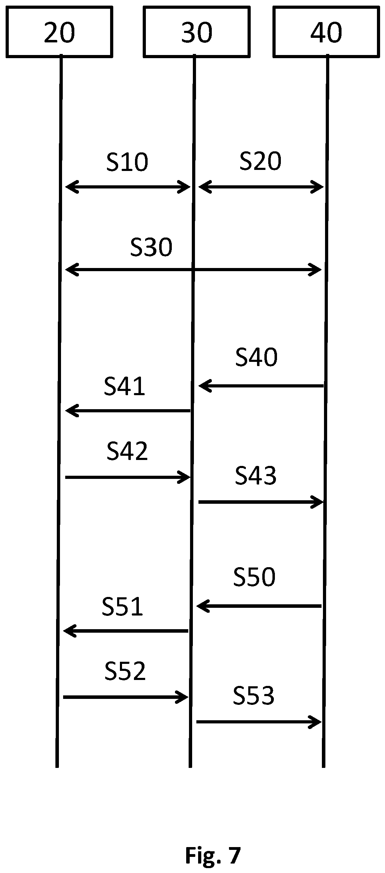

- Fig. 7: eine schematische Darstellung eines Kommunikationsablaufs zwischen einer Kommunikationsvorrichtung, einem Vermittlungsserver und einem Fernzugriffsserver.

In den Figuren sind wiederkehrende Merkmale mit denselben Bezugszeichen versehen.

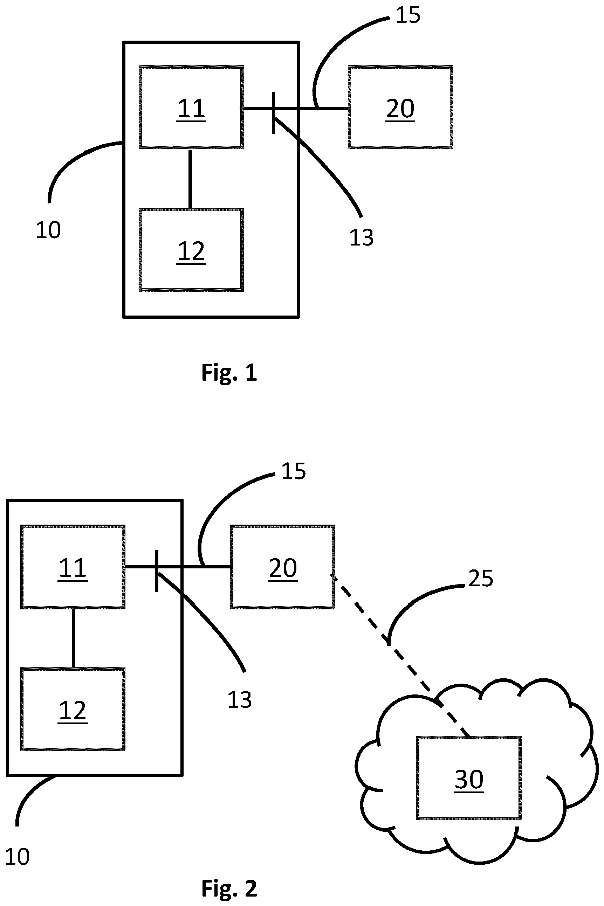

Die Fign. 1-6 zeigen eine schematische Darstellung eines Fahrzeuges 10. Obwohl in den Fign. 2-6 ein Kraftfahrzeug angedeutet ist, kann es sich bei dem Fahrzeug 10 auch um ein Motorrad, ein Lastfahrzeug oder Ähnliches handeln. Das Fahrzeug 10 weist eine Vielzahl von Steuergeräten 11, 12 auf, z.B. mindestens 10 oder mehr. Die zunehmende Vernetzung von Steuergeräten 11, 12 in heutigen Kraftfahrzeugen bietet immer bessere Einwirkungsmöglichkeiten auf Funktionalitäten im Fahrzeug 10, z.B. bessere Diagnosemöglichkeiten im Fehlerfall oder Möglichkeiten zur Fernbedienung von Funktionen und/oder Komponenten des Fahrzeugs 10. Üblicherweise sind die Steuergeräte 11, 12 miteinander z.B. über ein CAN-Bussystem verbunden. Hierbei kann das Steuergerät 11 in Fig. 1 repräsentativ für eine erste Gruppe von Steuergeräten 11 sein. Das zweite Steuergerät 12 in Fig. 1 kann repräsentativ für eine zweite Gruppe von Steuergeräten 12 sein.

Die Steuergeräte 11, 12 sind üblicherweise jeweils mit einer Vielzahl von Sensoren verbunden, die während des Betriebs des Fahrzeuges 10 Messwerte oder Betriebsparameter erfassen. Denkbare Sensormessgrößen umfassen beispielsweise eine Kühlmitteltemperatur, eine Motortemperatur, eine Fahrzeuggeschwindigkeit, eine Motordrehzahl, ein Motordrehmoment, eine Umgebungstemperatur, einen Umgebungsluftdruck, einen Ladedruck eines Abgasturboladers des Antriebsmotors, einen eingelegten Gang eines Getriebes des Fahrzeugs 10 usw.. Falls ein durch einen Sensor gemessener Messwert einen bestimmten Sollwertbereich je nach Sensor unter- oder überschreitet, erzeugt das entsprechende Steuergerät 11, 12 einen Fehlercode, der üblicherweise in einem Speicher des jeweiligen Steuergeräts 11, 12 gespeichert wird. Der Fehlercode ist einem Fehlerzustand zugeordnet und beinhaltet beispielsweise eine Kennziffer zur Identifikation von Fehlfunktionen, die während des Betriebs eines Fahrzeugs auftreten können. Der Fehlercode wird auch als Diagnosefehlercode oder Diagnostic Trouble Code (DTC) bezeichnet. Außerdem können die Steuergeräte 11, 12 direkt oder zumindest indirekt, z.B. über das CAN-Bussystem, mit einer Fahrzeugdiagnoseschnittstelle 13 verbunden sein. Statt auf einzelne Komponenten 11, 12, 13 des Fahrzeuges 10 wird nachstehend der Einfachheit halber manchmal lediglich auf das Fahrzeug 10 Bezug genommen.

Weiter zeigt die Fig. 1 eine Kommunikationsvorrichtung 20, die typischerweise eine Steuer- und Verarbeitungseinheit, einen Speicher sowie Kommunikationsmittel umfasst. Üblicherweise kann die Kommunikationsvorrichtung 20 mittels Signalleitungen 15 (also drahtgebunden) an die Fahrzeugdiagnoseschnittstelle 13 des Fahrzeuges 10 angeschlossen werden, und somit mit dem CAN-Bussystem und den Steuergeräten 11, 12 in Verbindung stehen. In manchen Ausführungsformen kann die Kommunikationsvorrichtung 20 als Dongle ausgestaltet sein.

Die Kommunikationsvorrichtung 20 weist typischerweise einen Stecker auf, der mit der Fahrzeugdiagnoseschnittstelle 13 kompatibel ist und in diese eingesteckt werden kann. Beim Verbinden des Steckers mit der Fahrzeugdiagnoseschnittstelle 13 werden beide elektrisch und mechanisch miteinander verbunden. Der Stecker kann direkt an einem Gehäuse der Kommunikationsvorrichtung 20 vorgesehen sein. Alternativ kann der Stecker auch mittels eines Verlängerungskabels mit weiteren Komponenten der Kommunikationsvorrichtung 20 verbunden sein. In manchen Fällen ist alternativ oder zusätzlich eine drahtlose Kommunikationsverbindung der Kommunikationsvorrichtung 20 mit dem Fahrzeug 10 und den Steuergeräten 11, 12 möglich, zum Beispiel eine Drahtlos-Nahverbindung wie Bluetooth oder WiFi. Manchmal ist die Kommunikationsvorrichtung 20 auch integraler Bestandteil des Fahrzeuges 10 und als solche in dieses integriert. Für die Kommunikation mit den Steuereinheiten 11, 12 kann dann eine entsprechende Kommunikationsschnittstelle im Fahrzeug vorgesehen sein, zum Beispiel über das CAN-Bussystem. Die Kommunikationsvorrichtung 20 kann somit im, am oder beim Fahrzeug 10 angeordnet sein. Die Kommunikationsvorrichtung 20 ist insbesondere ausgestaltet, nach außengehende Datenströme der Steuereinheiten 11, 12 zu verarbeiten und zum Fahrzeug gehende Datenströme von externen Einheiten 30, 40, 60, 70 zu verarbeiten. Insofern kann die Kommunikationsvorrichtung 20 eine erste Sende- und Empfangseinheit und eine zweite Sende- und Empfangseinheit aufweisen, welche einerseits für die Kommunikation bzw. Datenstrom zum Fahrzeug 10 hin bzw. andererseits für die Kommunikation bzw. Datenstrom aus dem Fahrzeug 10 heraus vorgesehen sind.

Die Kommunikationsvorrichtung 20 ist außerdem ausgestaltet über eine Luftschnittstelle 25, welche insbesondere ein Mobilfunknetz gemäß einem der Mobilfunk-Standards G1-G5 oder höher einschließt, mit weiteren externen Komponenten zu kommunizieren. In manchen Ausführungsformen ist die Kommunikationsvorrichtung 20 als Gateway-Einrichtung ausgestaltet, welche für den Empfang und das Senden von Daten über die Luftschnittstelle 25 und zum Beispiel für die Gewährleistung von Sicherheitsfunktionen zuständig sein kann. Die Kommunikationsvorrichtung 20 kann durch ein Identifikationsmerkmal, z.B. IMEI (international mobile equipment identity), eindeutig identifizierbar sein.

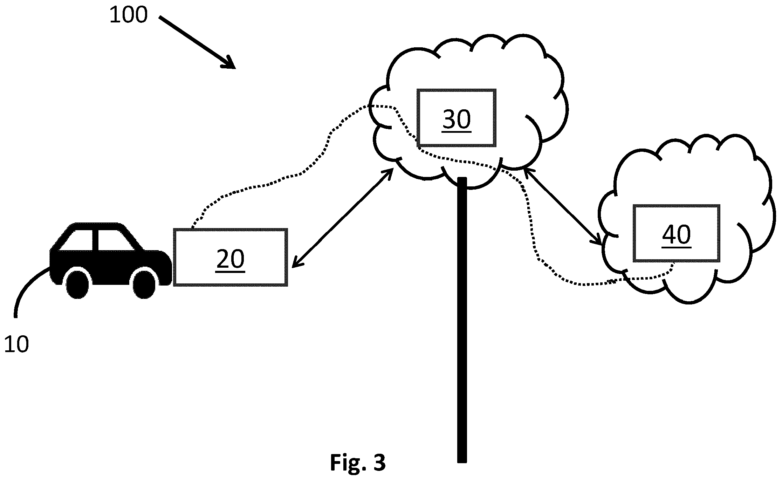

Mit der Erfindung werden Verfahren zum Durchführen einer Fernzugriffs auf ein Fahrzeug 10, insbesondere die Steuergeräte 11, 12 des Fahrzeuges 10 bereitgestellt. Die Verfahren werden vorzugsweise mittels eines in Fig. 3-6 angedeuteten Systems 100 durchgeführt, das die bereits genannte Kommunikationsvorrichtung 20, einen Vermittlungsserver 30 und einen Fernzugriffsserver 40 umfasst. Die im Zusammenhang mit der Fig. 1 beschriebene Kommunikationsvorrichtung 20 ist insbesondere ausgestaltet, über die genannte Luftschnittstelle 25 mit dem Vermittlungsserver 30 zu kommunizieren, vgl. Fig. 2 und Fign. 3-6, und über den Vermittlungsserver 30 mit dem Fernzugriffsserver 40 zu kommunizieren.

Die Kommunikationsvorrichtung 20 befindet sich standardmäßig, also wenn kein anderweitiger Befehl vorliegt oder Einstellung vorgenommen wurde, im Datenübertragungsmodus. Der Datenübertragungsmodus der Kommunikationsvorrichtung 20 ermöglicht eine Datenübertragung zwischen der Kommunikationsvorrichtung 20 und dem Vermittlungsserver 30 sowie eine Datenübertragung von den fahrzeugseitigen Steuergeräten 11, 12 bzw. der ersten Gruppe von Steuergeräten 11 und der zweiten Gruppe von Steuergeräten 12 zu dem Vermittlungsserver 30 über die Kommunikationsvorrichtung 20.

Bei der Datenübertragung im Datenübertragungsmodus können Telematikdaten von den Steuergeräten 11, 12 zum Vermittlungsserver 30 übertragen werden, wobei die Telematikdaten Fahrzeugkenndaten, Fehlercodes und/oder Fahrzeugsensormesswerte umfassen können, insbesondere gemäß einem genormten oder spezifischen Protokoll. Üblicherweise können im Datenübertragungsmodus lediglich Daten oder Einstellungen von den Steuergeräten 11, 12 und den zugehörigen Sensoren ausgelesen und an den Vermittlungsserver 30 geschickt werden. Die in den Fahrzeugsteuergeräten 11, 12 gespeicherten Daten oder Einstellungen können im Datenübertragungsmodus üblicherweise jedoch nicht geändert werden. Durch das Übersenden der Telematikdaten der Fahrzeugsteuergeräte 11, 12 über die Kommunikationsvorrichtung 20 an den Vermittlungsserver 30 können im Vermittlungsserver 30 beschränkte Fahrzeugdiagnosefunktionen durchgeführt werden, welche sich nur auf das Auslesen und Auswerten der Telematikdaten beziehen.

Optional kann im Datenübertragungsmodus die Datenübertragung vom Fahrzeug 10 zum Vermittlungsserver 30 auf die genannte erste Gruppe von fahrzeugseitigen Steuergeräten 11 beschränkt sein. Es kann somit im Datenübertragungsmodus vorgesehen sein, dass nicht alle Steuergeräte 11, 12 mit externen Geräten wie dem Vermittlungsserver 30 oder dem Fernzugriffsserver 40 kommunizieren bzw. Daten an diese externen Geräte übertragen. Die ersten Steuergeräte 11 können hierbei zum Beispiel für Fahrzeugfunktionen zuständig sein, welche nicht-kritisch in der Diagnosekommunikation oder für die Fahrzeugsicherheit sind. Beispielhafte Funktionen beziehen sich auf den Betrieb des Antriebsstrang oder Klimaanlage, oder ähnlichen.

Im Datenübertragungsmodus ist insbesondere lediglich eine unidirektionale Kommunikation von den Steuergeräten 11, 12 zum Vermittlungsserver 30 über die Kommunikationsvorrichtung 20 möglich.

Der Vermittlungsserver 30 ist entweder nicht befugt oder nicht imstande oder beides, einen Fernzugriff auf die ersten Steuergeräte 11 und/oder die zweiten Steuergeräte 12 durchzuführen. Um einen derartigen Fernzugriff zu ermöglichen, ist ein Fernzugriffsserver 40 vorgesehen. Die Kommunikationsvorrichtung 20 weist hierzu einen Fernzugriffsmodus auf, welcher den Fernzugriff durch den Fernzugriffsserver 40 auf die fahrzeugseitigen Steuergeräte 11, 12 über den Vermittlungsserver 30 erst ermöglicht.

Der Fernzugriffsserver 40 kann im Fernzugriffsmodus berechtigt sein, Daten, Einstellungen und/oder Programme im fahrzeugseitigen Steuergerät 11, 12 zu lesen, schreiben und ändern. Lesen heißt hierbei, dass die Daten von den Steuergeräten 11, 12 über die Kommunikationsvorrichtung 20 und den Vermittlungsserver 30 an den Fernzugriffsserver 40 geschickt werden. Schreiben und Ändern heißt hierbei, dass eine Nachricht mit dem entsprechenden Schreibe- oder Änderungsbefehl von dem Fernzugriffsserver 40 an das jeweilige Steuergerät 11, 12 geschickt wird, und ein Schreibe- oder Änderungsvorgang im jeweiligen Steuergerät 11, 12 veranlasst wird.

Der Fernzugriff umfasst zum Beispiel eine Fernwirkung, Fernabfrage, Fernsteuerung, Ferndiagnose, Fernunterstützung, Fernkonfigurierung, Fernwartung, Softwaredownload, Softwareaktualisierung und/oder Remote-Flashing des fahrzeugseitigen Steuergeräts 11, 12 durch den Fernzugriffsserver 40. Der Fernzugriffsserver 40 kann für jede dieser Funktionalitäten einen dezidierten Server oder eine dezidierte Prozessoreinheit aufweisen. Manche Funktionalitäten können auch zusammengefasst durch einen Server oder eine Prozessoreinheit ausgeführt werden.

Unter Fernwirkung bzw. Fernabfrage wird dabei im Wesentlichen die Fernsteuerung von Fahrzeugfunktionen, insbesondere Komfortfunktionen wie das Einschalten der Standheizung, etc. sowie das Abfragen von Fahrzeugstatus und/oder Betriebsparametern verstanden.

Ferndiagnose umfasst das Fernauslesen von Diagnosedaten aus dem Fahrzeug, deren Analyse und gegebenenfalls das Erzeugen einer Empfehlung für das weitergehende Handeln. Analyse der Daten und Generierung der Empfehlung erfolgt dabei durch den Fernzugriffsserver 40. Der Fernzugriffsmodus erlaubt im Gegensatz zum Datenübertragungsmodus die Durchführung von uneingeschränkten Fahrzeugdiagnosefunktionen. Zum Beispiel können Fehlercodes gelöscht, umfängliche Bauteile (Stellglieder) angesteuert werden und insbesondere Arbeitswerte/Lernwerte zurückgesetzt, werden, während dies im Datenübertragungsmodus nicht möglich ist.

Fernunterstützung stellt das Lösen eines Problems im Fahrzeug 10 oder eine Unterstützung beim Lösen des Problems durch den Fernzugriffsserver 40 dar. Dies kann zum Beispiel durch Schicken von Handlungsempfehlungen an das Fahrzeug 10 oder den Fahrzeugführer erfolgen.

Fernkonfigurierung bezieht sich insbesondere auf das Vornehmen von Einstellungen, insbesondere Einstellungsänderungen, oder Einstellungsaktualisierungen in den Steuergeräten 11, 12 durch den Fernzugriffsserver 40.

Fernwartung stellt im Wesentlichen die Überwachung des Fahrzeugzustandes und den Zugriff auf die Wartungsdaten im Fahrzeug 10 bzw. den Steuergeräten 11, 12 von einer zentralen Stelle, nämlich dem Fernzugriffsserver 40, aus dar, um zu überprüfen, ob, wann und welche Maßnahmen zur Wahrung eines Sollzustandes des Fahrzeuges durchgeführt werden.

Ferner ist in diesem Zusammenhang als Funktion der sogenannte SoftwareDownload, Softwareaktualisierung bzw. das Remote-Flashing zu nennen, mit deren Hilfe ein neuer Programmcode, ein aktualisierter Programmcode oder Parameter auf der Software konfigurierbare Systeme im Fahrzeug 10, beispielsweise den Steuergeräten 11, 12, aufgebracht werden, um die Funktionalität oder die Leistungsfähigkeit zu erhöhen. Die Steuergeräte 11, 12 können z.B. beim Remote-Flashing reprogrammiert werden. Diese Funktionen können im Übertragungsmodus typischerweise nicht realisiert werden.

Zusätzlich können noch Grundeinstellungen für Sensoren von Fahr-Assistenz-Systemen (z.B. Kamera, Radar, oder dergleichen), welche einen Fahrzyklus erfordern angestoßen werden.

Lernwerte, welche in den Steuergeräten abgelegt sind und ggf. Fehlfunktionen verursachen, können im Fernzugriffmodus gelöscht werden (ähnlicher Vorgang wie ein Reset in der IT-Technologie).

Im Fernzugriffsmodus kann sich der Fernzugriff auf eine zweite Gruppe von vorbestimmten fahrzeugseitigen Steuergeräten 12 erstrecken. Die zweiten Steuergeräte 12 können fahrzeugsicherheitsrelevante Funktionen wie Bremsen, Lenken, Motorsteuerung usw. aufweisen. Es kann auch vorgesehen sein, dass im Fernzugriffsmodus auf Steuergeräte 12 zugegriffen wird, die im Pannenfall relevant sind. Insofern können die zweiten Steuergeräte 12 beschränkt sein auf diejenigen Steuergeräte 12, welche eine Panne des Fahrzeuges 10 verursachen können. Grundsätzlich kann aber vollumfänglich auf die Steuergerätefunktionen aller sich im Fahrzeugbefindlichen Steuergeräte zugegriffen werden. Eine Panne ist im Sinne der vorliegenden Schrift ein plötzlich auftretender Schaden oder eine technische Störung, die ein Weiterfahren des Fahrzeuges 10 zumindest vorübergehend unmöglich oder sehr hinderlich oder riskant macht. Derartige Steuergeräte sind dem Fachmann bekannt, weil es sich im Pannenfall meistens um ganz bestimmte Steuergeräte handelt.

Die zweiten Steuergeräte 12 können eine zweite Anzahl von Steuergeräten umfassen. Die zweite Anzahl kann größer sein als die erste Anzahl. Es kann eine teilweise Überschneidung der ersten und der zweiten Steuergeräte 11, 12 im Fernzugriffsmodus geben. Die zweite Gruppe von Steuergeräten 12 kann die erste Gruppe von Steuergeräten 11 miteinschließen. Optional kann sich der Fernzugriff im Fernzugriffsmodus auf alle Steuergeräte 11, 12 erstrecken.

Weiter kann es vorgesehen sein, dass die Kommunikationsvorrichtung 20 im Fernzugriffsmodus nur vom Fernzugriffsserver 40 kommende Nachrichten, Anfragen oder Befehle an das jeweilige Steuergerät 11, 12 weiterleitet. Durch entsprechende Verschlüsselungen oder Codes kann die Kommunikationsvorrichtung 20 imstande sein, zu erkennen, ob die Nachrichten, Anfragen oder Befehle vom Fernzugriffsserver 40 stammen oder ob sie einen anderen Ursprung haben, wie z.B. der Vermittlungsserver 30.

Der Datenübertragungsmodus und der Fernzugriffsmodus können sich also in mindestens einem der folgenden Punkte voneinander unterscheiden:
- eingeschränkte Fahrzeugdiagnose im Datenübertragungsmodus,
- vollumfassende Fahrzeugdiagnose im Fernzugriffsmodus
- unterschiedliche Gruppen von Steuergeräten 11, 12 werden angesprochen,
- Lesen, Schreiben und Ändern von in den Steuergeräten 11, 12 gespeicherten Daten, Einstellungen und/oder Programmen im Fernzugriffsmodus,
- Im Datenübertragungsmodus lediglich Lesen von in den Steuergeräten 11, gespeicherten Daten im Übertragungsmodus,
- im Fernzugriffsmodus: Weiterleiten von Nachrichten, Anfragen oder Befehle an die Steuergeräte 11, 12, welche typischerweise ausschließlich vom Fernzugriffsserver 40 stammen.

Um zwischen dem Datenübertragungsmodus und dem Fernzugriffsmodus zu wechseln, kann die Kommunikationsvorrichtung 20 einen Schalter, insbesondere einen logischen oder virtuellen Schalter aufweisen. Durch Umlegen des Schalters kann zwischen den beiden Modi gewechselt werden. Die Aktivierung des Fernzugriffsmodus bzw. den Wechsel zwischen den beiden Modi wird durch eine Aktivierungsnachricht veranlasst, welche von dem Fernzugriffsserver 40 über den Vermittlungsserver 30 an die Kommunikationsvorrichtung 20 geschickt wird. Dieser Prozess wird nachstehend beschrieben.

Zunächst wird eine erste Kommunikationsverbindung zwischen der Kommunikationsvorrichtung 20 und dem Vermittlungsserver 30 über die Luftschnittstelle 25 aufgebaut (S10).

Danach ― oder davor oder gleichzeitig - wird eine zweite Kommunikationsverbindung zwischen dem Vermittlungsserver 30 und dem Fernzugriffsserver 40 aufgebaut (S20). Der Aufbau der ersten Kommunikationsverbindung kann den Aufbau der zweiten Kommunikationsverbindung automatisch auslösen. Alternativ kann auch vorgesehen sein, dass die zweite Kommunikationsverbindung durch ein weiteres Ereignis ausgelöst wird, zum Beispiel den Empfang einer Nachricht von einem mobilen Endgerät 60, s. unten. Alternativ kann die zweite Kommunikationsverbindung bereits vor Aufbau der ersten Kommunikationsverbindung bestehen. Zum Beispiel kann die zweite Kommunikationsverbindung eine dauerhafte Kommunikationsverbindung zwischen dem Vermittlungsserver 30 und dem Fernzugriffsserver 40 sein, welche über den Fernzugriff auf das jeweilige Fahrzeug 10 hinaus besteht, während die erste Kommunikationsverbindung zeitlich auf den Fernzugriff begrenzt ist.

Im Anschluss wird ein bidirektionaler Kommunikationskanal zwischen der Kommunikationsvorrichtung 20 und dem Fernzugriffsserver hergestellt (S30), welcher auch als Tunnel bezeichnet werden kann. Der Tunnel wird vorzugsweise mittels eines gesicherten und verschlüsselten Netzwerkprotokolls aufgebaut, sodass der Tunnel abhör- und manipulationssicher ist. Dieser Aspekt kann insbesondere bei sicherheitsrelevanten oder -kritischen Steuergeräten 12 wichtig sein, auf welche nicht durch unbefugte Personen oder Instanzen zugegriffen werden darf.

Jetzt ist der Vermittlungsserver 30 in der Lage, eine Kommunikation zwischen dem Fernzugriffsserver 40 und der Kommunikationsvorrichtung 20 zu vermitteln. So kann der Vermittlungsserver 30 mittels des bidirektionalen Kommunikationskanals Daten oder Nachrichten von dem Fernzugriffsserver 40 an die Kommunikationsvorrichtung 20 weiterleiten und andersherum.

Der Fernzugriffsserver 40 führt anschließend den folgenden Schritt durch:
- Senden (S40) einer Aktivierungsnachricht von dem Fernzugriffsserver 40 über den Vermittlungsserver 30 an die Kommunikationsvorrichtung 20, um den Fernzugriffsmodus zu aktivieren und von dem Datenübertragungsmodus in den Fernzugriffsmodus zu wechseln.

Nach Empfang der Aktivierungsnachricht von dem Fernzugriffsserver 40 schickt (S41) der Vermittlungsserver 30 die Aktivierungsnachricht an die Kommunikationsvorrichtung 20. In manchen Ausführungsformen wird die Aktivierungsnachricht durch den Vermittlungsserver 30 einfach weitergeleitet. In anderen Ausführungsformen wird die Aktivierungsnachricht bei Bedarf durch den Vermittlungsserver gemäß einem Protokoll codiert, verschlüsselt, geändert oder übersetzt, beispielsweise damit die Kommunikationsvorrichtung 20 die Aktivierungsnachricht lesen, decodieren, entschlüsseln und/oder unterstützen kann.

Die Kommunikationsvorrichtung 20 wechselt daraufhin von dem Datenübertragungsmodus in den Fernzugriffsmodus basierend auf der Aktivierungsnachricht. Hiernach können eine Bestätigung des Moduswechsels und/oder eine Empfangsbestätigung der Aktivierungsnachricht von der Kommunikationsvorrichtung 20 an den Vermittlungsserver 30, und optional weiter an den Fernzugriffsserver 40 geschickt werden (S42, S43).

Vorzugsweise findet der Fernzugriff basierend auf einem Fahrzeugidentifikationsmerkmal und/oder einem Steuergerätidentifikationsmerkmal statt. In diesem Fall kann es vorteilhaft sein, folgende Schritte durchzuführen:
- Empfangen mindestens eines Fahrzeugidentifikationsmerkmals, wobei das Fahrzeugidentifikationsmerkmal eine Fahrzeugidentifizierungsnummer und/oder einen Motorcode und/oder eine Steuergerätidentifizierungsnummer umfasst.

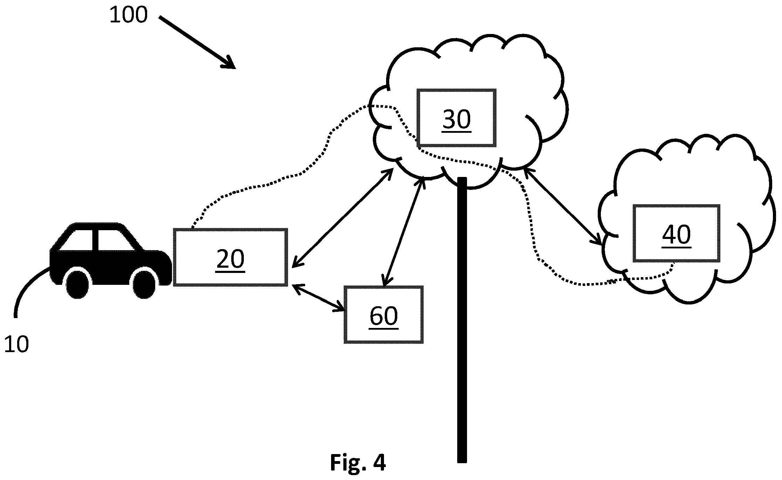

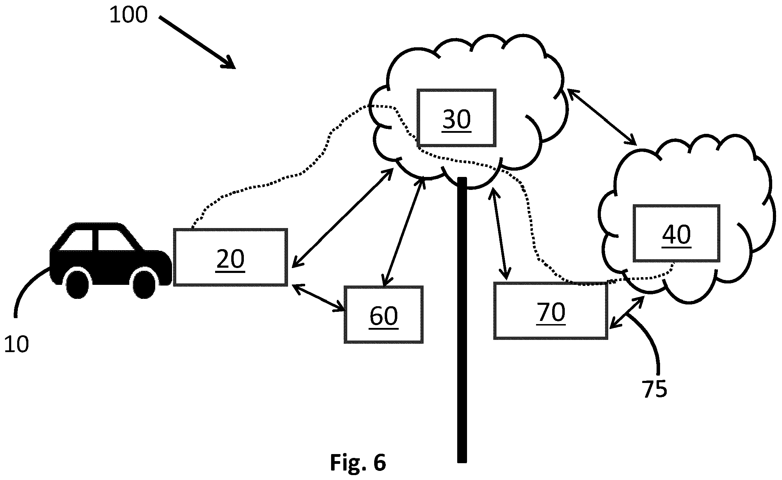

Das Fahrzeugidentifikationsmerkmal kann zum Beispiel von einem Kunden über ein mobiles Endgerät 60 (vgl. Fign. 4 und 6) an den Vermittlungsserver 30 geschickt werden. Alternativ oder zusätzlich kann auch die Kommunikationsvorrichtung 20 das Fahrzeugidentifikationsmerkmal an den Vermittlungsserver 30 schicken.

Der Vermittlungsserver 30 leitet das Fahrzeugidentifikationsmerkmal an den Fernzugriffsserver 40 weiter und fordert die notwendige Konfiguration für das Fahrzeugidentifikationsmerkmal an. Die nächsten Schritte finden bevorzugt im Fernzugriffsserver 40 statt, können alternativ auch im Vermittlungsserver 30 stattfinden:
- Vergleichen des Fahrzeugidentifikationsmerkmals mit bekannten Fahrzeugidentifikationsmerkmalen aus einer Datenbank und
- Erkennen des Fahrzeuges 10 durch den Vergleich, vorzugsweise fahrzeugherstellerübergreifend und vom Fahrzeughersteller unabhängig.

Das Fahrzeugidentifikationsmerkmal kann somit im Vermittlungsserver 30 und/oder im Fernzugriffsserver 40 empfangen und verarbeitet werden. Die genannte Datenbank kann somit Bestandteil des Vermittlungsservers 30 und/oder des Fernzugriffsservers 40 sein. Basierend auf dem Fahrzeugidentifikationsmerkmal 10 kann eine spezifische Konfiguration für den Fernzugriff und/oder für die Kommunikation zwischen den Einheiten 10, 20, 30, 40 des Systems erzeugt werden. Oftmals unterscheiden sich nämlich Sende- und Empfangsprotokolle für die im Fahrzeug 10 verbauten Steuergeräte 11, 12 je nach Fahrzeughersteller und/oder Steuergerätehersteller. Mit der hier vorgestellten Lösung werden die im System 100 versandten Datenpakete bzw. Nachrichten speziell für das jeweilige Fahrzeug 10 konfiguriert und auf dieses zugeschnitten.

Optional kann der Fernzugriffsserver 40 den Vermittlungsserver 30 über die spezifische Konfiguration der Kommunikation informieren. Der Vermittlungsserver 30 baut dann die erste Kommunikationsverbindung und die zweite Kommunikationsverbindung sowie den Tunnel entsprechend dieser Konfiguration und basierend auf dem Fahrzeugidentifikationsmerkmal auf.

In manchen Ausführungsformen wird eine Prozessor-Einheit im Fernzugriffsserver 40 speziell und insbesondere fahrzeugspezifisch für den Fernzugriff auf das Fahrzeug 10 konfiguriert, zum Beispiel über Software definierte Netzwerke (software defined networking, SDN). Dies geschieht insbesondere bevor der Fernzugriff auf das Fahrzeug 10 durchgeführt wird. Der Fernzugriffsserver 40 passt die Konfiguration der Prozessor-Einheit entsprechend dem Fahrzeugidentifikationsmerkmal, wie Fahrzeugidentifikationsnummer (VIN, vehicle identification number), Fahrzeughersteller und/oder Steuergerät 11, 12, dynamisch an. Somit können fahrzeugspezifisch die richtigen Fernzugriffsfunktionen durch die Prozessor-Einheit bzw. den Fernzugriffsserver 40 ausgewählt und bereitgestellt werden. Danach kann der Fernzugriff mittels des Fernzugriffsservers 40 fahrzeugspezifisch stattfinden.

Die Aktivierungsnachricht kann insbesondere in Bezug auf das Fahrzeugidentifikationsmerkmal und/oder das Steuergerätidentifikationsmerkmal erzeugt werden. Somit kann auch die Aktivierungsnachricht speziell für das Fahrzeug 10 konfiguriert und erstellt werden. Die Aktivierungsnachricht kann zum Beispiel durch die für das Fahrzeug 10 konfigurierte Prozessor-Einheit erstellt werden. Anhand der VIN und, optional, weiteren Fahrzeugdaten kann der Fernzugriffsserver 40 bestimmen, um welches Fahrzeug 10 es sich genau handelt. Daraufhin können die entsprechenden Kommunikationsparameter für die fahrzeugspezifische Kommunikation über die Kommunikationsvorrichtung 20 am Fahrzeug 10 zusammengestellt werden.

Die Verschlüsselung der Daten bzw. ausgetauschten Nachrichten kann im Vermittlungsserver 30 stattfinden.

Optional kann vorgesehen sein, dass der Moduswechsel erst dann vollzogen wird, wenn zusätzlich eine Zustimmungsnachricht eines Benutzers vorliegt. So kann vorgesehen sein, dass ein Benutzer oder der Fahrzeugführer dem Fernzugriff seines Fahrzeuges 10 ausdrücklich zustimmen muss, insbesondere vor Verbindungsaufbau. In diesem Fall können folgende Schritte durchgeführt werden:
Jetzt ist die Kommunikationsvorrichtung 20 im Fernzugriffsmodus und kann der Fernzugriff durch folgenden Schritt stattfinden:
- Durchführen (S50-S53) des Fernzugriffs auf das mindestens eine fahrzeugseitige Steuergerät 11, 12 durch den Fernzugriffsserver 40.

Der Fernzugriff wird vorzugsweise in Echtzeit durchgeführt. Mit anderen Worten wird, abgesehen von übertragungsbedingten Latenzzeiten, in Echtzeit auf die fahrzeugseitigen Steuergeräte 11, 12 zugegriffen.

Vor dem Herstellen der ersten Kommunikationsverbindung kann eine Anfrage für einen Fernzugriff empfangen werden. Die Anfrage für den Fernzugriff kann optional in der Kommunikationsvorrichtung 20 oder in einem mobilen Endgerät 60 erzeugt werden. Die Kommunikationsvorrichtung 20 bzw. falls vorhanden das mobile Endgerät 60 schickt die Anfrage an den Vermittlungsserver 30. Von hier aus kann die Anfrage weitergeleitet werden, sodass der Fernzugriffsserver 40 ebenfalls von der Anfrage erfährt. Die Anfrage kann somit an verschiedenen Stellen empfangen und weitergeleitet werden, beispielsweise in der Kommunikationsvorrichtung 20, im Vermittlungsserver 30 und/oder im Fernzugriffsserver 40. Die Anfrage kann durch einen Anruf durch das mobile Endgerät 60 in einem Call-Center erzeugt werden.

Die Anfrage enthält typischerweise mindestens ein Fahrzeugidentifikationsmerkmal zum Identifizieren des Fahrzeuges 10 (vgl. oben) und/oder ein Identifikationsmittel zum Identifizieren der Kommunikationsvorrichtung 20. Das Verfahren kann mindestens einen der folgenden Schritte aufweisen:
- Herstellen der ersten Kommunikationsverbindung basierend auf der Anfrage,
- Herstellen der zweiten Kommunikationsverbindung basierend auf der Anfrage und
- Herstellen des bidirektionalen Kommunikationskanals zwischen der Kommunikationsvorrichtung 20 und dem Fernzugriffsserver 40 basierend auf der Anfrage.

Typischerweise wird die Aktivierungsnachricht über den hergestellten Kommunikationskanal zwischen der Kommunikationsvorrichtung 20 und dem Fernzugriffsserver 40 geschickt, wonach der Fernzugriffsmodus aktiviert wird. Danach wird der folgende Schritt durchgeführt:
- Durchführen des Fernzugriffs durch den Fernzugriffsserver 40 über den bidirektionalen Kommunikationskanal.

Um die Systemsicherheit zu erhöhen, kann das Verfahren optional den folgenden Schritt aufweisen:
- Empfangen einer Zustimmungsnachricht, insbesondere einer Text- oder Sprachnachricht, um dem Fernzugriff zuzustimmen.

Die Zustimmungsnachricht kann durch die Kommunikationsvorrichtung 20, den Vermittlungsserver 30 und/oder den Fernzugriffsserver 40 empfangen werden. Die Zustimmungsnachricht kann z.B. vor Ort an der Kommunikationsvorrichtung 20 eingegeben werden, z.B. über eine entsprechende Eingabevorrichtung der Kommunikationsvorrichtung 20 oder im Fahrzeug 10. Die Zustimmungsnachricht kann aber auch von einem mobilen Endgerät 60 empfangen werden (vgl. Fign. 4 und 6) bzw. dort von einem Benutzer eingegeben werden. Das mobile Endgerät 60 kann kommunikativ mit der Kommunikationsvorrichtung 20 verbunden sein, z.B. drahtlos wie über Bluetooth oder WiFi und/oder drahtgebunden. Optional ist das mobile Endgerät über eine Luftschnittstelle mit dem Vermittlungsserver 40 verbunden.

Falls die Zustimmungsnachricht durch die Kommunikationsvorrichtung 20 empfangen wird, kann der folgende Schritt durchgeführt werden:
- Wechseln von dem Datenübertragungsmodus in den Fernzugriffsmodus basierend auf der Aktivierungsnachricht und der Zustimmungsnachricht.

Mittels der Zustimmungsnachricht kann sichergestellt werden, dass nur dann ein Fernzugriff mittels des Fernzugriffsservers 40 ermöglicht wird, wenn der Fernzugriff durch einen Benutzer bestätigt und freigegeben wird. Die Zustimmungsnachricht kann vor oder nach Versand der Aktivierungsnacht versandt bzw. empfangen werden.

Es kann alternativ oder zusätzlich auch vorgesehen sein, dass der Aufbau des Tunnels von dem Vorliegen der Zustimmungsnachricht abhängt. In diesem Falle kann der nächste Schritt durchgeführt werden:
- Herstellen des bidirektionalen Kommunikationskanals zwischen der Kommunikationsvorrichtung 20 und dem Fernzugriffsserver 40 basierend auf der Anfrage und der Zustimmungsnachricht.

Üblicherweise wird eine Identifikation des Fahrzeugs 10 benötigt, damit der Fernzugriffsserver 40 die Fehlercodes einem bestimmten Hersteller und Fahrzeugtyp zuordnen kann.

In einer Variante schickt der Fernzugriffsserver 40 eine Anfrage zum Identifizieren des Fahrzeuges 10 an den Vermittlungsserver 30, welcher die Anfrage an das die Kommunikationsvorrichtung weiterleitet. Daraufhin sendet die Kommunikationsvorrichtung 20 mindestens ein Fahrzeugidentifikationsmerkmal des Fahrzeuges 10, welches in einem fahrzeugseitigen Speicher gespeichert sein kann, über den Vermittlungsserver 30 zum Fernzugriffsserver 40.

Hiernach kann der zum Fernzugriffsserver 40 z.B. Fehlercodes vom Fahrzeug 10 anfordern. Der Vermittlungsserver 30 leitet z.B. die Anforderung vom zum Fernzugriffsserver 40 weiter zur Kommunikationsvorrichtung 20, welche wiederum das entsprechende Fahrzeugsteuergerät 11, 12 anspricht. Hieraufhin sendet (S14) das Fahrzeug 10 die angeforderten Fehlercodes zur Kommunikationsvorrichtung 20, welche die Fehlercodes an den Fernzugriffsserver 40 mithilfe des Vermittlungsservers 30 schickt. Nach Empfang können die Fehlercodes durch den Fernzugriffsserver 40 analysiert bzw. ausgewertet werden.

Ziel der Fahrzeugdiagnose ist es, feststellen zu können, wie schwerwiegend eine Fehlfunktion ist, welches Bauteil im Fahrzeug 10 ggf. defekt ist und wie dieses Bauteil repariert werden kann. Um feststellen zu können, welches Bauteil des Fahrzeuges defekt ist, wertet der Fernzugriffsserver 40 die Fehlercodes aus, welche wie bereits oben beschrieben im laufenden Betrieb des Fahrzeuges 10 über eine Auswertung der Sensormesswerte durch das mindestens eine Fahrzeugsteuergerät 11, 12 erzeugt werden und in einem fahrzeugseitigen Speicher gespeichert werden.

Nach einer entsprechenden Aufforderung sind die Fahrzeugsteuergeräte 11, 12 dazu ausgestaltet, die im Fahrzeug 10 gespeicherten Fehlercodes auszulesen und an die Kommunikationsvorrichtung 20 zu übermitteln. Die Kommunikationsvorrichtung 20 kann also direkt mit dem jeweiligen Fahrzeugsteuergerät 11, 12 kommunizieren, um die benötigten Fehlercodes vom Fahrzeugsteuergerät 11, 12 anzufordern und zu erlangen. Mittels einer Analyse der Fehlercodes kann diagnostiziert werden, ob und welche Fahrzeugkomponenten repariert oder ersetzt werden müssen, um das Problem zu beheben. Somit kann mittels einer Auswertung der Fehlercodes (Fahrzeugdiagnose) eine Aussage darüber getroffen werden, welche Fahrzeugkomponenten defekt sind und eine Reparatur benötigen.

Für eine genauere Diagnose kann der Fernzugriffsserver 40 zusätzlich Sensormesswerte vom Fahrzeug 10 (bzw. den entsprechenden Steuergeräten 11, 12) anfordern. Dies geschieht z.B. über eine Anforderung, die über den Vermittlungsserver 30 und die Kommunikationsvorrichtung an das Fahrzeug 10 weitergeleitet wird. Das Fahrzeug 10 (bzw. die fahrzeugseitigen Steuergeräte 11, 12) ruft die angeforderten Sensormesswerte aus dem fahrzeugseitigen Speicher ab oder spricht entsprechende Fahrzeugsensoren zur Herausgabe oder zum Erfassen der Sensormesswerte an. Die Sensormesswerte werden dann vom Fahrzeug 10 zur Kommunikationsvorrichtung 20 geschickt und weiter über den Vermittlungsserver 30 zum Fernzugriffsserver 40 zur weiteren Auswertung oder Bearbeitung geschickt. Basierend auf den Fehlercodes, dem Fahrzeugidentifikationsmerkmal und den Sensormesswerten kann der Fernzugriffsserver 40 feststellen, welches Bauteil im Fahrzeug 10 defekt ist und eine Reparatur benötigt.

Weiter kann der Fernzugriffsserver 40 über die Kommunikationsvorrichtung 20 Befehle an das Fahrzeug 10 schicken. Z.B. umfasst ein Befehl an das Fahrzeug 10 eine Einstellung des Sensors oder eine Änderung der Einstellung des Sensors (z.B. Grundeinstellung), wobei die Einstellung z.B. eine Empfindlichkeit des Sensors, eine Häufigkeit der Messungen und/oder einen zeitlichen Ablauf der Messungen einschließt.

Zusätzlich oder alternativ kann der Status des Fahrzeugs 10 durch den Fernzugriffsserver 40 über eine entsprechende Nachricht geändert oder gesetzt werden. Denkbar wäre in diesem Zusammenhang z.B. Inspektionsintervall, Ansteuerung von Stellgliedern oder dergleichen.

Das Fahrzeug 10 kann auch neue Softwarekomponenten oder Updates bekommen, die der Fernzugriffsserver 40 über die Einheiten 20, 30 zum Fahrzeug 10 schickt.

Wie bereits oben angedeutet kann im System 100 zusätzlich ein mobiles Endgerät 60 wie ein mobiles Telefon, Smartphone, Smartwatch, Laptop, Computer, Tablet-PC oder dergleichen, vorgesehen sein, das einerseits mit dem Fahrzeug 10, insbesondere über die Kommunikationsvorrichtung 20, und andererseits mit dem Vermittlungsserver 30 verbunden ist. Das mobile Endgerät 60 ist in den Figuren 4 und 6 gezeigt. Über das mobile Endgerät 60 können zum Beispiel die Anfrage und/oder die Zustimmungsnachricht verschickt werden. Außerdem kann der gesamte Prozess des Fernzugriffs über das mobile Endgerät 60 angestoßen werden. Das mobile Endgerät 60 kann durch ein Identifikationsmerkmal, z.B. IMEI (international mobile equipment identity), eindeutig identifiziert werden.

Der Fernzugriffsmodus sollte vorzugsweise nur aktiviert sein, wenn sich das Fahrzeug nicht bewegt. Falls nämlich Änderungen an den Steuergeräten 11, 12 im Fahrtbetrieb des Fahrzeuges 10 vorgenommen werden, kann dies die Sicherheit des Fahrzeuges und der Fahrzeuginsassen gefährden. Andererseits kann der Übertragungsmodus auch dann aktiviert sein, wenn sich das Fahrzeug bewegt bzw. fährt.

Es kann daher sinnvoll sein, zusätzlich folgende Schritte zu implementieren:
- Beurteilen, ob sich das Fahrzeug 10 bewegt, insbesondere anhand von GPS-Daten, Satellitendaten, Funkortungssignalen oder Bewegungsdaten von Bewegungssensoren.

Für die Beurteilung, ob sich das Fahrzeug 10 bewegt, können z.B. Motordrehzahlsensor, Tachometer, Bewegungssensoren sowie andere fahrzeugseitige Sensoren im Fahrzeug 10 verwendet werden. Die Beurteilung, ob sich das Fahrzeug 10 bewegt, kann somit im Fahrzeug 10 selbst oder außerhalb des Fahrzeuges 10, z.B. durch den Vermittlungsserver 30 oder den Fernzugriffsserver 40, getroffen werden. Im letzteren Fall können alternativ oder zusätzlich auch die GPS-Daten, Satellitendaten, Funkortungssignalen für die Beurteilung herangezogen werden. Je nachdem, wo die Beurteilung gemacht wird, kann eine Nachricht an die anderen Komponenten des Systems 100 geschickt werden, um diese darüber zu informieren.

Weitere Schritte umfassen folgende Aktionen:
- wenn festgestellt wird, dass sich das Fahrzeug 10 bewegt: Beenden des Fernzugriffsmodus und/oder Aktivieren des Datenübertragungsmodus und/oder Abbrechen des Kommunikationskanals zwischen der Kommunikationsvorrichtung 20 und dem Fernzugriffsserver 40,
- wenn festgestellt wird, dass sich das Fahrzeug 10 im Stillstand befindet: Aktivieren des Fernzugriffsmodus und/oder Aufbauen des Kommunikationskanals zwischen der Kommunikationsvorrichtung 20 und dem Fernzugriffsserver 40 und/oder Aufrechterhalten des Kommunikationskanals zwischen der Kommunikationsvorrichtung 20 und dem Fernzugriffsserver 40.

Der Fernzugriffsmodus kann also in Abhängigkeit der Beurteilung, ob das Fahrzeug 10 sich bewegt oder nicht, aktiviert, aufrechterhalten oder beendet werden.

Gemäß einer zusätzlichen oder alternativen Sicherheitsmaßnahme kann der Fahrbetrieb des Fahrzeuges 10 gesperrt werden, solange die Kommunikationsvorrichtung 20 im Fernzugriffsmodus ist und/oder der Fernzugriffsserver 40 den Fernzugriff auf die Steuergeräte 11, 12 durchführt. Erst wenn der Fernzugriff abgeschlossen ist, und die Kommunikationsvorrichtung 20 wieder im Datenübertragungsmodus ist, kann der Fahrbetrieb wieder freigegeben werden.

Es kann vorgesehen sein, dass zwischen dem wenigstens einen Steuergerät 11, 12 des Fahrzeugs 10 und der Kommunikationsvorrichtung 20 ein Transport-Protokoll vorgesehen ist, welches zur Sicherstellung der Übertragung Zeitbedingungen vorschreibt, die wesentlich kürzer sind als über die Luftschnittstelle 25 realisierbar wären. Vorzugsweise enthält die Kommunikationsvorrichtung 20 daher Mittel, die die Zeitbedingungen in der fahrzeuginternen Kommunikation durch Senden von zeitkorrekten Signalen einhält.

Zusätzlich oder alternativ kann der folgende Schritt durchgeführt werden:
- periodisches Senden von Keep-Alive-Signalen an die Kommunikationsvorrichtung 20, um den Fernzugriffsmodus aufrecht zu erhalten.

Es kann vorgesehen sein, dass die Keep-Alive-Signale in Abhängigkeit einer ermittelten Latenzzeit gesendet werden. Die Latenzzeit kann zum Beispiel über Zeitmessungen der Kommunikationswege ermittelt werden. Ebenso können Fahrzeugkommunikationsparameter wie z.B. 7F-Handling zum Ausgleich der Latenzzeiten genutzt werden.

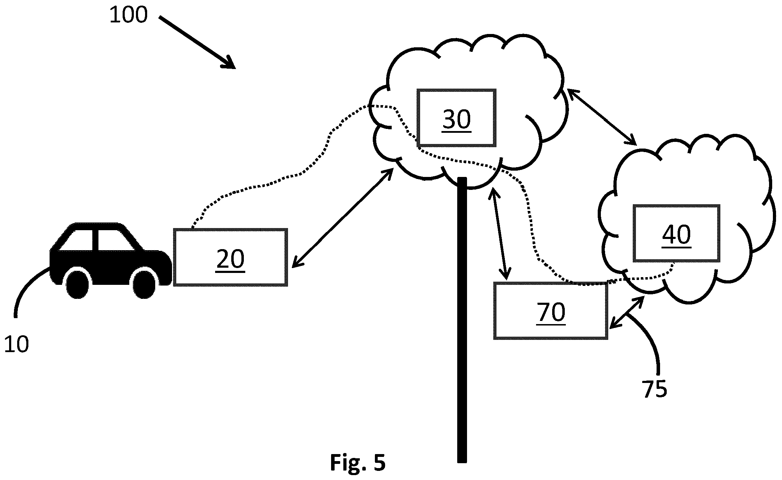

Optional kann die Kommunikation zwischen dem Fernzugriffsserver 40 und dem Vermittlungsserver 30 über eine dazwischengeschaltete zweite Kommunikationsvorrichtung 70 erfolgen, welche in den Figuren 5 und 6 schematisch dargestellt ist. Die zweite Kommunikationsvorrichtung 70 kann ähnliche Aufgaben wie die erste Kommunikationsvorrichtung 20 erfüllen und ähnliche Komponenten wie die erste Kommunikationsvorrichtung 20 aufweisen. So kann die zweite Kommunikationsvorrichtung 70 als Gateway-Einrichtung ausgestaltet sein, welche für den Empfang und das Senden von Daten und zum Beispiel für die Gewährleistung von Sicherheitsfunktionen zuständig sein kann. Die zweite Kommunikationsvorrichtung 70 kann Hardware wie eine Steuer- und Verarbeitungseinheit, einen Speicher sowie Kommunikationsmittel aufweisen. Üblicherweise ist die Kommunikationsvorrichtung 70 mittels Signalleitungen 75 (also drahtgebunden) mit dem Fernzugriffsserver 40 verbunden. Alternativ kann diese Verbindung auch drahtlos ausgestaltet sein, zum Beispiel über eine Drahtlos-Nahverbindung wie Bluetooth oder WiFi. Manchmal ist die Kommunikationsvorrichtung 70 auch integraler Bestandteil des Fernzugriffsservers 40 und als solche in diesen integriert. Die Kommunikationsvorrichtung 70 kann auch zumindest teilweise als Software-Lösung in dem Fernzugriffsserver 40 implementiert sein. Die Kommunikationsvorrichtung 70 kann somit im, am oder beim Fernzugriffsserver 40 angeordnet sein. Die Kommunikationsvorrichtung 70 ist insbesondere ausgestaltet, nach außengehende Datenströme des Fernzugriffsservers 40 zu verarbeiten und zum Fernzugriffsserver 40 gehende Datenströme von externen Einheiten 10, 20, 30, 60, 70 zu verarbeiten. Insofern kann die Kommunikationsvorrichtung 70 eine erste Sende- und Empfangseinheit und eine zweite Sende- und Empfangseinheit aufweisen, welche für die Kommunikation nach innen bzw. außen vorgesehen sind. Manchmal kann die Kommunikationsvorrichtung 70 als Dongle ausgestaltet sein.

Es kann vorgesehen sein, dass die Kommunikation zwischen dem Fernzugriffsserver 40 und externen Einheiten wie dem Vermittlungsserver 30 und/oder der Kommunikationsvorrichtung 20 im Fernzugriffsmodus über die zweite Kommunikationsvorrichtung 70 erfolgt, vorzugsweise ausschließlich. Insbesondere kann der vorstehend genannte Tunnel im Fernzugriffsmodus zwischen den beiden Kommunikationsvorrichtungen 20, 70 aufgebaut werden. Im Datenübertragungsmodus kann die Kommunikation auch über andere Kanäle verlaufen, wie in den Figuren 5 und 6 durch den Doppelpfeil zwischen dem Vermittlungsserver 30 und dem Fernzugriffsserver 40 angedeutet ist.

Die Funktionalität und Logik der zweiten Kommunikationsvorrichtung 70 können auch komplett durch den Fernzugriffsserver 40 übernommen werden. Dieser Fall ist in den Figuren 3 und 4 gezeigt.

Es sei erwähnt, dass die erste Kommunikationsvorrichtung 20, der Vermittlungsserver 30, der Fernzugriffsserver 40, das mobile Endgerät 60 und/oder die zweite Kommunikationsvorrichtung jeweils mit dem Internet verbunden sein können.

Die Kommunikation aus der Ferne kann auch bei solchen Fahrzeugen 10 ermöglicht werden, bei denen ein Security Access vom Fahrzeughersteller für den gesicherten Diagnosezugriff zum Fahrzeug 10 implementiert ist. In diesem Falle kann ein vom Hersteller vorgegebener Authentifizierungsprozess durchlaufen werden. Hierfür werden eventuell Abfragen über persönliche Informationen zur Authentifizierung von einer externen Stelle, wie einem Call-Center, sowie auch eine Freigabe durch den Fahrzeugführer oder Benutzer eingeholt. Dieser Prozess wird ggf. in den Ablauf des Fernzugriffsmodus oder auch des Datenübertragungsmodus hinzugefügt. Entscheidend ist hier, welche Vorgaben der jeweilige Fahrzeughersteller für eine Diagnosekommunikation der Steuergeräte 11, 12 mit externen Komponenten voraussetzt.

Es versteht sich, dass die in den Figuren 1-6 dargestellten und oben beschriebenen Merkmale bzw. Schritte miteinander kombiniert werden können, sofern sich die Kombinationen nicht gegenseitig ausschließen.

### Bezugszeichenliste

- 10: Fahrzeug
- 11: Fahrzeugsteuergerät
- 12: Fahrzeugsteuergerät
- 13: OBD-Schnittstelle
- 15: Signalleitungen
- 20: erste Kommunikationsvorrichtung
- 25: Luftschnittstelle
- 30: Vermittlungsserver
- 40: Fernzugriffsserver
- 60: mobiles Endgerät
- 70: zweite Kommunikationsvorrichtung
- 75: Signalleitungen
- 100: System

## Patentansprüche

1. Verfahren für einen Fernzugriff auf ein Fahrzeug (10) mittels eines Fernzugriffsservers (40), wobei der Fernzugriffsserver (40) ausgestaltet ist, auf mindestens ein fahrzeugseitiges Steuergerät (11, 12) zuzugreifen, um den Ferngriff durchzuführen,
wobei eine im, am oder beim Fahrzeug (10) angeordnete Kommunikationsvorrichtung (20) ausgestaltet ist, über eine Luftschnittstelle (25) mit einem Vermittlungsserver (30) zu kommunizieren und über eine weitere Kommunikationsschnittstelle (13) mit mindestens einem fahrzeugseitigen Steuergerät (11, 12) zu kommunizieren,
die Kommunikationsvorrichtung (20) aufweisend:
- einen Datenübertragungsmodus, welcher eine Datenübertragung von dem mindestens einen fahrzeugseitigen Steuergerät (11, 12) zu dem Vermittlungsserver (30) ermöglicht, und
- einen Fernzugriffsmodus, welcher den Fernzugriff durch den Fernzugriffsserver (40) auf das mindestens eine fahrzeugseitige Steuergerät (11, 12) über den Vermittlungsserver (30) ermöglicht,
das Verfahren umfassend die Schritte:
- Senden (S40) einer Aktivierungsnachricht von dem Fernzugriffsserver (40) über den Vermittlungsserver (30) an die Kommunikationsvorrichtung (20), um den Fernzugriffsmodus zu aktivieren und von dem Datenübertragungsmodus in den Fernzugriffsmodus zu wechseln und
- Durchführen (S50) des Fernzugriffs auf das mindestens eine fahrzeugseitige Steuergerät (11, 12) durch den Fernzugriffsserver (40).

2. Verfahren für einen Fernzugriff auf ein Fahrzeug (10), mit einer im, am oder beim Fahrzeug (10) angeordneten Kommunikationsvorrichtung (20), welche ausgestaltet ist, über eine Luftschnittstelle (25) mit einem Vermittlungsserver (30) zu kommunizieren und über eine weitere Kommunikationsschnittstelle (13) mit mindestens einem fahrzeugseitigen Steuergerät (11, 12) zu kommunizieren,
die Kommunikationsvorrichtung (20) aufweisend:
- einen Datenübertragungsmodus, welcher eine Datenübertragung von dem mindestens einen fahrzeugseitigen Steuergerät (11, 12) zu dem Vermittlungsserver (30) ermöglicht, und
- einen Fernzugriffsmodus, welcher den Zugriff durch einen Fernzugriffsserver (40) auf das mindestens eine fahrzeugseitige Steuergerät (11, 12) über den Vermittlungsserver (30) ermöglicht,
das Verfahren umfassend die Schritte:
- Empfangen einer Aktivierungsnachricht von dem Fernzugriffsserver (40) über den Vermittlungsserver,
- Wechseln von dem Datenübertragungsmodus in den Fernzugriffsmodus basierend auf der Aktivierungsnachricht.

3. Verfahren nach dem vorstehenden Anspruch, umfassend die weiteren Schritte:
- Empfangen einer Zustimmungsnachricht, insbesondere einer Text- oder Sprachnachricht, um dem Fernzugriff zuzustimmen, und
- Wechseln von dem Datenübertragungsmodus in den Fernzugriffsmodus basierend auf der Aktivierungsnachricht und der Zustimmungsnachricht.

4. Verfahren nach einem der vorstehenden Ansprüche, weiter umfassend die Schritte:
- Aufbauen einer ersten Kommunikationsverbindung zwischen der Kommunikationsvorrichtung (20) und dem Vermittlungsserver (30) über die Luftschnittstelle (25),
- Aufbauen einer zweiten Kommunikationsverbindung zwischen dem Vermittlungsserver (30) und dem Fernzugriffsserver (40) und
- Herstellen eines bidirektionalen Kommunikationskanals zwischen der Kommunikationsvorrichtung (20) und dem Fernzugriffsserver (40) über den Vermittlungsserver.

5. Verfahren nach dem vorstehenden Anspruch, umfassend die weiteren Schritte:
- Empfangen einer Anfrage für einen Fernzugriff, vorzugsweise von einem mobilen Endgerät, wobei die Anfrage mindestens ein Identifikationsmittel zum Identifizieren des Fahrzeuges und/oder zum Identifizieren der Kommunikationsvorrichtung (20) enthält,
- Herstellen des Kommunikationskanals zwischen der Kommunikationsvorrichtung (20) und dem Fernzugriffsserver (40) basierend auf der Anfrage,
- Durchführen des Fernzugriffs durch den Fernzugriffsserver (40) über den Kommunikationskanal.

6. Verfahren nach einem der vorstehenden Ansprüche, umfassend die zusätzlichen Schritte:
- Beurteilen, ob sich das Fahrzeug (10) bewegt, insbesondere anhand von GPS-Daten, Satellitendaten, Funkortungssignalen oder Bewegungsdaten von Bewegungssensoren,
- wenn festgestellt wird, dass sich das Fahrzeug (10) bewegt: Beenden des Fernzugriffsmodus und/oder Aktivieren des Datenübertragungsmodus und/oder Abbrechen des Kommunikationskanals zwischen der Kommunikationsvorrichtung (20) und dem Fernzugriffsserver (40),
- wenn festgestellt wird, dass sich das Fahrzeug (10) im Stillstand befindet: Aktivieren des Fernzugriffsmodus und/oder Aufbauen des Kommunikationskanals und/oder Aufrechterhalten des Kommunikationskanals.

7. Verfahren nach einem der vorstehenden Ansprüche, wobei das Fahrzeug (10) eine Vielzahl von Steuergeräten (11, 12) aufweist, wobei die Datenübertragung von den fahrzeugseitigen Steuergeräten (11, 12) zum Vermittlungsserver (30) im Datenübertragungsmodus auf eine erste Gruppe von vorbestimmten fahrzeugseitigen Steuergeräten (11) beschränkt ist, wobei sich der Fernzugriff im Fernzugriffsmodus auf eine zweite Gruppe von fahrzeugseitigen Steuergeräten (12) erstreckt, und sich die erste Gruppe von der zweiten Gruppe unterscheidet.

8. Verfahren nach einem der vorstehenden Ansprüche, wobei der Fernzugriffsserver (40) im Fernzugriffsmodus berechtigt ist, Daten, Einstellungen und/oder Programme im fahrzeugseitigen Steuergerät (11, 12) zu lesen, schreiben und ändern, während im Datenübertragungsmodus Daten des Steuergerätes (11, 12) nur gelesen werden können.

9. Verfahren nach einem der vorstehenden Ansprüche, wobei der Fernzugriff und/oder die Aktivierungsnachricht basierend auf einem Fahrzeugidentifikationsmerkmal und/oder einem Steuergerätidentifikationsmerkmal konfiguriert werden.

10. Verfahren nach einem der vorstehenden Ansprüche, **dadurch gekennzeichnet, dass** der Fernzugriff eine Fernwirkung, Fernsteuerung, Ferndiagnose, Fernunterstützung, Fernkonfigurierung, Fernwartung, Softwareaktualisierung und/oder Remote-Flashing des fahrzeugseitigen Steuergeräts (11, 12) durch den Fernzugriffsserver (40) umfasst.

11. Fernzugriffsserver (40), ausgestaltet zum Durchführen des Verfahrens nach Anspruch 1.

12. Kommunikationsvorrichtung (20), ausgestaltet zum Durchführen des Verfahrens nach Anspruch 2.

13. Kommunikationsvorrichtung (20) nach dem vorstehenden Anspruch, umfassend einen Schalter, insbesondere einen virtuellen Schalter, der ausgestaltet ist, zwischen dem Datenübertragungsmodus und dem Fernzugriffsmodus zu wechseln.

14. Kommunikationsvorrichtung (20) nach einem der beiden vorstehenden Ansprüche, wobei die Kommunikationsschnittstelle der Kommunikationsvorrichtung (20) mit einer fahrzeugseitigen Diagnoseschnittstelle (13) verbindbar ist, insbesondere mechanisch und/oder elektrisch verbindbar.

15. System (100), umfassend den Fernzugriffsserver (40) nach Anspruch 11 und die Kommunikationsvorrichtung (20) nach einem der Ansprüche 12-14.
